# EUROPÄISCHE PATENTSCHRIFT

(11) **EP 3 297 780 B1**
(45) Veröffentlichungstag und Bekanntmachung des Hinweises auf die Patenterteilung: **17.04.2024**
(21) Anmeldenummer: 16722595.2
(22) Anmeldetag: 04.05.2016
(51) Int. Cl.: B22F 10/28, B22F 10/64, B22F 10/66, B22F 3/105, F01D 5/02, B23P 15/00, F04D 29/02, F04D 29/28, F01D 5/34, B22F 3/24, C22C 1/04, F04D 29/22, B33Y 40/20

(54) **VERFAHREN ZUM HERSTELLEN EINES ROTORS EINER STRÖMUNGSMASCHINE**
METHOD FOR PRODUCING A ROTOR OF A FLOW ENGINE
PROCÉDÉ DE FABRICATION D'UN ROTOR DE TURBOMACHINE

(30) Priorität: 20.05.2015 DE 102015006463
(43) Veröffentlichungstag der Anmeldung: 28.03.2018
(73) Patentinhaber: MAN Energy Solutions SE, 86153 Augsburg (DE)
(72) Erfinder: THON, Ralf, 16727 Velten (DE)
(86) Internationale Anmeldenummer: PCT/EP2016/059982
(87) Internationale Veröffentlichungsnummer: WO 2016/184685

(56) Entgegenhaltungen:
- EP-A1- 2 620 594
- WO-A1-2013/029584
- WO-A1-2015/088852
- DE-A1- 10 261 262
- DE-A1-102006 049 216
- JP-A- 2008 291 315
- US-A1- 2011 309 230

## Beschreibung

Die Erfindung betrifft ein Verfahren zum Herstellen eines Rotors einer Strömungsmaschine.

Eine Strömungsmaschine, die als Verdichter oder auch als Turbine ausgebildet sein kann, verfügt einerseits über statorseitige Baugruppen und andererseits über rotorseitige Baugruppen. Zu den rotorseitigen Baugruppen gehört ein Rotor, der sogenannte Laufschaufeln trägt. Besonders bevorzugt kommen in Strömungsmaschinen integral beschaufelte Rotoren zum Einsatz, bei welchen die Laufschaufeln integraler Bestandteil eines Rotorgrundkörpers sind. Ferner sind aus dem Stand der Technik Rotoren bekannt, die radial außen über ein Außendeckband verfügen.

Aus der DE 102 61 262 A1 ist ein integral beschaufelter Rotor mit Außendeckband bekannt, bei welchem die Laufräder mit einem Rotorgrundkörper durch Verschweißen fest verbunden sind. Dabei kommt als Schweißen entweder Laserstrahlschweißen oder Elektronenstrahlschweißen zum Einsatz. Das Außendeckband kann radial außen mit den Laufschaufeln ebenfalls durch Verschweißen fest verbunden sein.

Das Herstellen eines integral beschaufelten Rotors mit Außendeckband durch Verschweißen ist aufwendig und fehleranfällig. So müssen zunächst der Rotorgrundkörper, die Laufschaufeln und das Außendeckband als separate Baugruppen hergestellt und anschließend durch Verschweißen miteinander verbunden werden. Beim Verschweißen besteht die Gefahr, dass die miteinander zu verschweißenden Baugruppen beschädigt werden. Hierdurch kann es zum Beispiel erforderlich werden, beschädigte Baugruppen auszutauschen.

Es besteht daher Bedarf an einem neuartigen Verfahren zum Herstellen eines Rotors einer Strömungsmaschine, bei welchem auf Schweißverfahren verzichtet werden kann.

Hiervon ausgehend liegt der vorliegenden Erfindung die Aufgabe zugrunde, ein neuartiges Verfahren zum Herstellen eines Rotors einer Strömungsmaschine zu schaffen. Diese Aufgabe wird durch ein Verfahren nach Anspruch 1 gelöst. Erfindungsgemäß wird zunächst ein die integralen Laufschaufeln und ein ein integrales Außendeckband aufweisender Rotorrohling über ein generatives Herstellverfahren hergestellt. Anschließend wird der Rotorrohling an strömungsführenden Abschnitten einer trennenden Oberflächenbehandlung durch Strömungsschleifen und getrennt hiervon an nicht strömungsführenden Abschnitten einer spanenden Oberflächenbehandlung unterzogen.

Die hier vorliegende Erfindung stellt eine völlig neuartige Prozesskette zum Herstellen eines integral beschaufelten Rotors mit Außendeckband bereit. So wird ein Rotorrohling, der die Laufschaufeln und das Außendeckband umfasst, über ein generatives Herstellverfahren hergestellt. Es ist keine Schweißverbindung zwischen dem Rotorgrundkörper, den Laufschaufeln und dem Außendeckband erforderlich. Nachfolgend erfolgt eine Oberflächenbehandlung des durch das generative Herstellverfahren hergestellten Rotorrohlings, nämlich getrennt im Bereich von strömungsführenden Abschnitten des Rotorrohlings sowie im Bereich von nicht-strömungsführenden Abschnitten des Rotorrohlings durch entsprechend angepasste Methoden der Oberflächenbehandlung.

Nach einer vorteilhaften Weiterbildung wird der die integralen Laufschaufeln und das integrale Außendeckband aufweisende Rotorrohling über selektives Laserschmelzen hergestellt, wobei der Rotorrohling an strömungsführenden Abschnitten einem Strömungsschleifen und an nicht-strömungsführenden Abschnitten einem Drehen unterzogen wird. Dies erlaubt eine besonders vorteilhafte Herstellung eines integral beschaufelten Rotors mit integralem Außendeckband.

Vorzugsweise wird als Metallpulver zum selektiven Laserschmelzen ein Metallpulver verwendet wird, welches in Gewichtsprozent folgende Zusammensetzung aufweist: 5,50-6,75 Al, 3,50-4,50 V, ≤0,30 Fe, ≤0,08 C, ≤0,05 N, ≤0,20 O, ≤0,015 H, und Ti im Rest. Ein derartiges Metallpulver eignet sich besonders vorteilhaft zum generativerativen Herstellen des Rotors über selektives Laserschmelzen.

Nach einer weiteren vorteilhaften Weiterbildung wird der Rotorrohling vor der trennenden Oberflächenbehandlung an strömungsführenden Abschnitten und vor der spanenden Oberflächenbehandlung an den nicht strömungsführenden Abschnitten einer Wärmebehandlung und/oder einem heißisostatischen Pressen unterzogen. Hiermit kann das Verfahren zum Herstellen eines Rotors weiter verbessert werden. Durch die Wärmebehandlung und/oder das heißisostatische Pressen kann der durch das generative Herstellverfahren hergestellte Rotorrohling vor der Oberflächenbehandlung hinsichtlich seiner Eigenschaften gezielt beeinflusst werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

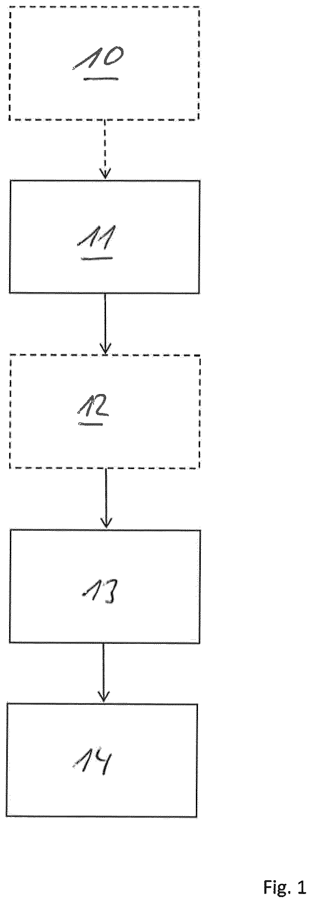

- Fig. 1:: ein Blockschaltbild zur Verdeutlichung von Verfahrensschritten des erfindungsgemäßen Verfahrens zur Herstellen eines Rotors einer Strömungsmaschine.

Die hier vorliegende Erfindung betrifft ein Verfahren zum Herstellen eines Rotors einer Strömungsmaschine, insbesondere eines Verdichters oder alternativ einer Turbine.

Das Verfahren dient dabei der Fertigung eines integral beschaufelten Rotors mit integralem Außendeckband, bei welchem also Laufschaufeln des Rotors integraler Bestandteil eines radial inneren Rotorgrundkörpers sind, und wobei der Rotor weiterhin radial außen ein Außendeckband aufweist, welches radial außen mit den Laufschaufeln fest verbunden ist.

Im Sinne der hier vorliegenden Erfindung wird zunächst ein Rotorrohling über ein generatives Herstellverfahren hergestellt, der integrale Laufschaufeln und das integrale Außendeckband aufweist. Die Laufschaufeln sind demnach integraler Bestandteil eines Rotorgrundkörpers, ebenso ist das Außendeckband integraler Bestandteil des Rotorrohlings. Anschließend wird der Rotorrohling an strömungsführenden Abschnitten einer trennenden Oberflächenbehandlung durch Strömungsschleifen und getrennt hiervon an nicht strömungsführenden Abschnitten einer spanenden Oberflächenbehandlung unterzogen.

Das erfindungsgemäße Verfahren zur Fertigung eines integral beschaufelten Rotors mit integralem Außendeckband kommt ohne Schweißverbindungen aus.

Weitere Details des erfindungsgemäßen Verfahrens werden nachfolgend unter Bezugnahme auf das Blockschaltbild der Fig. 1 beschrieben, wobei in Fig. 1 in durchgezogener Linienführung gezeigte Blöcke obligatorische Verfahrensschritte des erfindungsgemäßen Verfahrens sind, wohingegen in gestrichelten Linienführungen gezeigte Blöcke nicht zwingende Bestandteil des erfindungsgemäßen Verfahrens zur Fertigung eines integral beschaufelten Rotors mit integralem Außendeckband sind.

In Schritt 10 der Fig. 1 werden Geometriedaten des herzustellenden Rotors bereitgestellt, wobei die Geometriedaten des Schritts 10 konstruktive Daten sind, die auf Grundlage von Prozessbedingungen sowie auf Grundlage einer Werkstoffauswahl für den zu fertigenden Rotor beruhen.

Auf Basis der in Schritt 10 bereitgestellten Geometriedaten erfolgt in einem Schritt 11 die Fertigung des Rotorrohlings über ein generatives Herstellverfahren, wobei der Rotorrohling einen Rotorgrundkörper, integrale Laufschaufeln und ein integrales Außendeckband aufweist.

Als generatives Herstellverfahren in Schritt 11 kommt vorzugsweise selektives Laserschmelzen zum Einsatz, wobei verfahrenstechnische Details des selektiven Laserschmelzens dem hier angesprochenen Fachmann grundsätzlich bekannt sind.

Vorzugsweise wird zum selektiven Laserschmelzen in Schritt 11 als Metallpulver ein Pulver genutzt, welches in Gewichtsprozent folgende Zusammensetzung aufweist:
5,50-6,75 Al (Aluminium)
3,50-4,50 V (Vanadium)
≤ 0,30 Fe (Eisen)
≤ 0,08 C (Kohlenstoff)
≤ 0,05 N (Stickstoff)
≤ 0,20 O (Sauerstoff)
≤ 0,015 H (Wasserstoff)
Ti (Titan) im Rest.

Aus einem solchen Metallpulver lässt sich ein Rotor für eine Strömungsmaschine mit integralen Laufschaufeln und integralem Außendeckband besonders vorteilhaft durch selektives Laserschmelzen herstellen.

Der in Schritt 11 durch selektives Laserschmelzen hergestellte Rotorrohling kann in dem optionalen Verfahrensschritt 12 einer Wärmebehandlung und/oder einem heißisostatischen Pressen unterzogen werden. Hiermit können Bauteileigenschaften des Rotorrohlings vor den nachfolgenden Verfahrensschritten 13 und 14 eingestellt bzw. beeinflusst werden.

In den obligatorischen Verfahrensschritten 13 und 14 erfolgt eine Oberflächenbehandlung des Rotorrohlings an strömungsführenden Abschnitten und an nicht strömungsführenden Abschnitten getrennt voneinander durch unterschiedliche Oberflächenbehandlungsverfahren, wobei vorzugsweise zunächst in einem Schritt 13 strömungsführende Abschnitte und anschließend in einem Schritt 14 nicht strömungsführende Abschnitte des Rotorrohlings der Oberflächenbehandlung unterzogen werden.

Im Schritt 13, in welchem die strömungsführenden Abschnitte des Rotorrohlings einer Oberflächenbehandlung unterzogen werden, kommt eine trennende Oberflächenbehandlung mittels Strömungsschleifen zum Einsatz.

Anschließend erfolgt im Verfahrensschritt 14 eine spanende Oberflächenbehandlung des Rotorrohlings an nicht strömungsführenden Abschnitten, vorzugsweise durch Drehen.

Mit dem erfindungsgemäßen Verfahren ist es möglich einen integral beschaufelten Rotor mit integralem Außendeckband ohne Restriktionen hinsichtlich Geometriefreiheit herzustellen. Ein Rotorrohling wird durch ein generatives Fertigungsverfahren, vorzugsweise durch selektives Laserschmelzen, gefertigt, und zwar vorzugsweise aus einem Metallpulver einer Titanlegierung. Der durch selektives Laserschmelzen hergestellte Rotorrohling wird dann einer Oberflächenbehandlung unterzogen, und zwar getrennt voneinander über entsprechend angepasste Oberflächenbehandlungsverfahren an strömungsführenden Abschnitten sowie an nicht strömungsführenden Abschnitten.

Die erfindungsgemäße Prozesskette erlaubt die Herstellung von aerodynamisch und thermodynamisch optimierten, integral beschaufelten Rotoren mit integralem Außendeckbändern, die ohne Schweißverbindungen auskommen und in Leichtbauweise realisiert werden können.

### Bezugszeichenliste

- 10: Schritt
- 11: Schritt
- 12: Schritt
- 13: Schritt
- 14: Schritt

## Patentansprüche

1. Verfahren zum Herstellen eines Rotors einer Strömungsmaschine, nämlich eines integral beschaufelten Rotors mit integralem Außendeckband, mit zumindest folgenden Schritten:
zunächst wird ein die integralen Laufschaufeln und ein das integrale Außendeckband aufweisender Rotorrohling über ein generatives Herstellverfahren hergestellt;
anschließend wird der Rotorrohling an strömungsführenden Abschnitten einer trennenden Oberflächenbehandlung durch Strömungsschleifen und getrennt hiervon an nicht strömungsführenden Abschnitten einer spanenden Oberflächenbehandlung unterzogen.

2. Verfahren nach Anspruch 1, **dadurch gekennzeichnet, dass** der die integralen Laufschaufeln und das integrale Außendeckband aufweisende Rotorrohling über selektives Laserschmelzen hergestellt wird.

3. Verfahren nach Anspruch 2, **dadurch gekennzeichnet, dass** als Metallpulver zum selektiven Laserschmelzen ein Metallpulver verwendet wird, welches in Gewichtsprozent folgende Zusammensetzung aufweist:
5,50-6,75 Al
3,50-4,50 V
≤ 0,30 Fe
≤ 0,08 C
≤ 0,05 N
≤ 0,20 O
≤ 0,015 H
Ti im Rest.

4. Verfahren nach einem der Ansprüche 1 bis 3, **dadurch gekennzeichnet, dass** der Rotorrohling an nicht-strömungsführenden Abschnitten einem Drehen unterzogen wird.

5. Verfahren nach Anspruch 3 und 4, **dadurch gekennzeichnet, dass** das Strömungsschleifen vor dem Drehen durchgeführt wird.

6. Verfahren nach einem der Ansprüche 1 bis 5, **dadurch gekennzeichnet, dass** der Rotorrohling vor der trennenden Oberflächenbehandlung und vor der spanenden Oberflächenbehandlung einer Wärmebehandlung unterzogen wird.

7. Verfahren nach einem der Ansprüche 1 bis 6, **dadurch gekennzeichnet, dass** der Rotorrohling vor der trennenden Oberflächenbehandlung und vor der spanenden Oberflächenbehandlung einem heißisostatischen Pressen unterzogen wird.

## Claims

1. A method for producing a rotor of a turbomachine, namely an integrally bladed rotor with integral outer shroud having at least the following steps:
Initially, a rotor blank comprising the integral moving blades and the integral outer shroud is produced by way of a generative manufacturing method;
following this, the rotor blank is subjected on flow-guiding portions to a separative surface treatment by flow grinding and separately to this on non-flow-guiding portions to a cutting surface treatment.

2. The method according to Claim 1,
**characterised in that**
the rotor blank comprising the integral moving blades and the integral outer shroud is produced via selective laser-melting.

3. The method according to Claim 2,
**characterised in that**
as metal powder for the selective laser-melting a metal powder is used, which in percent by weight has the following composition:
5.50-6.75 AI
3.50-4.50 V
≤ 0.30 Fe
≤ 0.08 C
≤ 0.05 N
≤ 0.20 O
≤ 0.015 H
Ti in the remainder

4. The method according to any one of the Claims 1 to 3,
**characterised in that**
the rotor blank on non-flow-guiding portions is subjected to a turning.

5. The method according to Claims 3 and 4,
**characterised in that**
the flow grinding is carried out prior to the turning.

6. The method according to any one of the Claims 1 to 5,
**characterised in that**
the rotor blank prior to the separative surface treatment and prior to the cutting surface treatment is subjected to a heat treatment.

7. The method according to any one of the Claims 1 to 6,
**characterised in that**
the rotor blank prior to the separative surface treatment and prior to the machining surface treatment is subjected to a hot isostatic pressing.

## Revendications

1. Procédé de production d'un rotor de turbomachine, à savoir un rotor intégralement aubagé avec une virole externe solidaire, comportant au moins les étapes suivantes :
tout d'abord, une ébauche de rotor présentant les pales de rotor intégrées et une virole externe solidaire est produite à l'aide d'un processus de fabrication génératif ;
l'ébauche de rotor est ensuite soumise sur des sections conductrices de flux à un traitement de surface de séparation par usinage par flux abrasif et, séparément, à un traitement de surface d'usinage sur les sections non conductrices de flux.

2. Procédé selon la revendication 1, **caractérisé en ce que** l'ébauche de rotor présentant les pales de rotor solidaires et la virole externe solidaire est réalisée par fusion laser sélective.

3. Procédé selon la revendication 2, **caractérisé en ce qu'**on utilise comme poudre métallique pour la fusion sélective au laser une poudre métallique, qui présente la composition suivante en pourcentage du poids :
5,50-6,75 Al
3, 50-4, 50 V
≤ 0, 30 Fe
≤ 0,08 C
≤ 0,05 N
≤ 0,20 O
≤0,015 H
Ti dans le reste.

4. Procédé selon une des revendications 1 à 3, **caractérisé en ce que** l'ébauche de rotor est soumise à un tournage sur des sections non conductrices de flux.

5. Procédé selon la revendication 3 et 4, **caractérisé en ce que** l'usinage par flux abrasif est effectué avant le tournage.

6. Procédé selon une quelconque des revendications 1 à 5, **caractérisé en ce que** l'ébauche de rotor est soumise à un traitement thermique avant le traitement de surface de séparation et avant le traitement de surface d'usinage.

7. Procédé selon une quelconque des revendications 1 à 6, **caractérisé en ce que** l'ébauche de rotor est soumise à un pressage isostatique à chaud avant le traitement de surface de séparation et avant le traitement de surface de découpe.
